# EUROPEAN PATENT APPLICATION

(11) **EP 2 045 679 A1**
(43) Date of publication of application: **08.04.2009**
(21) Application number: 07019382.6
(22) Date of filing: 03.10.2007
(51) Int. Cl.: G05B 19/418, G05B 23/02

(54) **A system and method for checking the consistency of a production schedule within a manufacturing execution system**

(71) Applicant: SIEMENS AKTIENGESELLSCHAFT, 80333 München (DE)
(72) Inventor: Gozzi, Andrea, 16145 Genova (IT)
(74) Representative: Fischer, Michael

(57) **Abstract**

It is the aim of the present invention to provide a system and a method for checking the consistency of a production schedule within a manufacturing execution system.

This aim is achieved according to the invention by a method and a system for checking the consistency of a production schedule within a manufacturing execution system; comprising the steps of:
a) scheduling a number of production activities in order to generate the production schedule;
b) defining a catalogue of constraints against which the scheduled production activities have to be checked;
c) checking the number of production activities against the catalogue of contraints in order to identify a violated constraint;
d) displaying a Gantt-chart of the production schedule;
e) marking in the Gantt-chart the production activities, for which a violated constraint has been identified;
f) adding to the marked production activity a graphical attribute; said attribute being representative for the violated constraint itself and/or for the type of the violated constraint.

These features now enable the production scheduler to receive a weighted information on the contraints currently violated including a direct linkage to the acitivity or the activities in the Gantt chart which has caused the respective violation.

## Description

The present invention relates to a system and a method for checking the consistency of a production schedule within a manufacturing execution system.

In the world of process automation and process monitoring standard automation systems for controlling the widest conceivable variety of machines and plants are state of the art. Such technology covers in particular a broad range of products which are offered by the Siemens Corp. under its SIMATIC® product family within the field of manufacturing execution systems (MES). An extensive line of products for solving the technical tasks in question such as counting, measuring, positioning, motion control, closed-loop control and cam control enhance the performance capabilities of appropriate process controllers. A variety of configurations enable the implementation of flexible machine concepts.

In this context a broad range of IT solutions exist to connect the actual hardware close to the technical and/or logistical process to the application layer of the client driving the installation. Manufacturing execution systems have therefore been developed to meet all of the requirements of a service oriented architecture (SOA) to integrate seamless into a totally integrated automation (TIA). A plug & play architecture, in which the individual functions can be easily combined and configured with each other thereby forms the basis for this success thereby simplifying the complex structures of controlling a manufacturing plant or the like.

These demands very often require in the backbone rather complicated and sophisticated software solutions which enable the approach of totally integrated automation. In view of this, the software engineers very often use production moduler to define the plant model and its standard operating procedures and create the respective new software by means of a high level graphical language which identifies the workflow of activities within the software. Subsequently, this string/term of high level graphical language is translated into a client based software language executable on the machine language level. This translation requires tremendous efforts in programming and need serious testing to check whether the translated program behaves the same as the original string/term of the high level graphical language.

For modeling the production system it is required to divide the productive process in many steps (hereinafter called product segments) so that each of the product segments represents a simple action that can be controlled by the MES system. This subdivision must take care of all dependencies existing between the product segments in order to guarantee that the entire production will be executed in the correct way. The most common dependency managed by MES systems and coded in international standard ANSI/ISA/95 represents the management of the timing relations between product segments. This type of dependency is used to define the temporal sequence of the execution of the single product segments. This dependency is modeled as typed link between the two product segments. The link type defines the type of dependency and an optional value can be used to add additional details or restraints (e.g. product segment A must start no later than 2 minutes after product segment B is started).

Further, after modeling the production system the concrete production has to be scheduled. For this purpose, interactive production scheduler - realized in software products - exist in the manufacturing world which allow the plant operator to plan the plant activities and to check automatically for a plurality of constraints whether the current production schedule violates any of them. Examples for possible constraints to be checked by the production scheduler are: incompatible machine, dependencies between activities, order release date, order due date, etc. In case the production scheduler detects the violation of one or more constraints, it would desirable if the production scheduler would inform the plant operator efficiently and self-explanatory in order to allow the plant operator or the personnel interacting with the production scheduler software to change the schedule accordingly. Unfortunately, due to the large number of possible violated constraints and the variety in types of constraints, this information is in currently existing systems not easy to manage in the graphical user interface. During this process of correcting violated constraints, the principle demand of a person using the production scheduler is to relate the violated constraint with the scheduled activity being displayed in the scheduler Gantt chart. This demand is currently not completely satisfied by the available production scheduler software products.

So far, commercially available production scheduler software products signal the violated constraints by means of a report containing the list of violated constraints. In order to simplify the information contained in the report, facilities are provided for sorting, filtering and performing sort of analysis of the report. Furthermore, interaction can be possible between the constraints listed in the report and the Gantt chart in order to link the respective activity displayed in the Gantt chart to the violated constraints comprised in the report. However, the existing solution do not completely satisfy the user's demands due to lack of provide all required information with one shot. Usually, he has to switch his GUI commands between the Gantt chart and the constraints report to be enable to check the violated constraints against the activites related to the respective constraints.

It is therefore the aim of the present invention to provide a system and a method for checking the consistency of a production schedule within a manufacturing execution system. Said system and method shall provide the required information by one shot in an ease and self-explanatory way.

This aim is achieved according to the invention by a method for checking the consistency of a production schedule within a manufacturing execution system; comprising the steps of:
a) scheduling a number of production activities in order to generate the production schedule;
b) defining a catalogue of constraints against which the scheduled production activities have to be checked;
c) checking the number of production activities against the catalogue of contraints in order to identify a violated constraint;
d) displaying a Gantt-chart of the production schedule;
e) marking in the Gantt-chart the production activities, for which a violated constraint has been identified;
f) adding to the marked production activity a graphical attribute; said attribute being representative for the violated constraint itself and/or for the type of the violated constraint.

According to the system this aim is achieved according to the invention by the system as defined in claim 4.

These features now enable the production scheduler to receive a weighted information on the contraints currently violated including a direct linkage to the acitivity or the activities in the Gantt chart which has caused the respective violation. The production scheduler does not need to scroll between different screens one displaying the Gantt chart and another one displaying the list of violated constraints. Therefore, violated constraints can be more efficient resolved by changing the activities or changing just only the series of scheduled activities.

In a preferred embodiment of the current invention, the catalogue may comprise at least one of the following constraints:
a) a resource allocated to the activity is not compatible with resource;
b) a dependency between production activities has not been properly observed;
c) a production order release date is out of an admitted time frame; and
d) a production order due date is out of an admitted time frame.
Among further possible constraints, the experience has shown that these constraints listed above are those constraints most violated during scheduling the production.

In order to support the production scheduler when identifying the position of an malicious activity and the related constraint hereto, it is advantageous when said graphical attribute comprises a symbol and/or a position of a symbol relative to the production activity which has caused the violation of the constraint represented by the attribute. Further, the Gantt chart including the production activity currently violating a constraint and a list of the violated constraints may be displayed simultaneously.

Other preferred embodiments of the present invention are listed in the remaining dependent claims.

Preferred examples of the present invention are described hereinafter in detail with reference to the following drawings which illustrates in:
- Figure 1: a schematic overview of a system for handling a production process within a manufacturing execution system; and
- Figure 2: a screen-shot of a production scheduler within the system of Fig. 1.

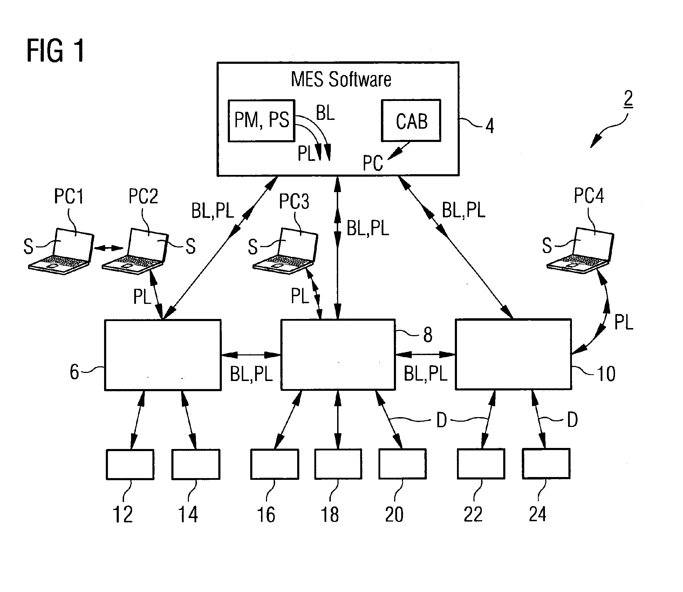

Figure 1 illustrates a schematic overview of a plant control system 2 working as a manufacturing execution system (MES). The system/network 2 comprises a number of data processing units 4, 6, 8, 10 running a MES software for modeling, scheduling, controlling and/or monitoring a production process operating a number of production components 12 to 24. The production components 12 bis 24 can be sensors, actuators, motors, step drives, conveyors, valves, pumps and the like. The data processing units 4 to 10 are network computer which typically comprise logical units, calculation means, storage means, display means and the like. The data processing units 4 to 10 are connected within a plant network in order to exchange data to the required extent. One of the data processing units, hereinafter referred to a master console 4, is executing the MES software for modeling, scheduling, controlling and monitoring the operation of the plant.

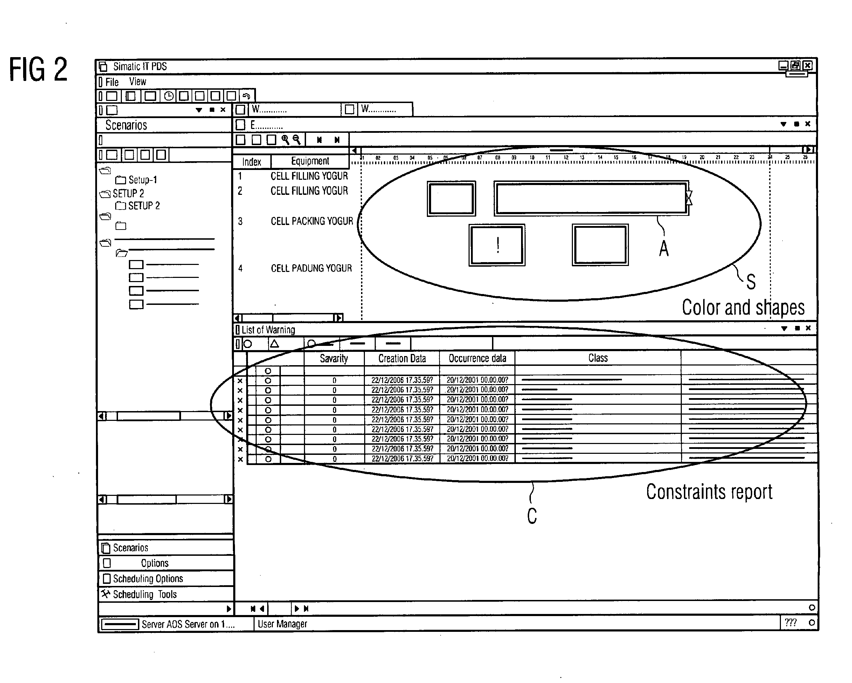

The master console 4 comprises within the MES software a production modeler PM. This production moduler PM is enabled to define a business logic BL within a fully graphical environment as fascilitated by the MES software. The business logic BL, when finally generated by the production modeler PM, comprises a plant model of the production process and the related operating procedures for the production components 12 to 24 in a fully graphical environment. Even for the creation of the business logic BL high-level graphical language is used within the MES software, preferably consistently with the ISA-95 standard. Further, the master console 4 comprises within the MES software a production scheduler PS. The production scheduler PS is enabled to define a production schedule based on the plant model generated by the production modeler PM. The production scheduler also assists to design the production schedule S (see Fig. 2) within a fully-graphical environment by using the activities and production facilities designed in the plant model.

The master console 4 further comprises a client application builder CAB within the MES software being enabled to provide a native, WEB based graphical user interface for generating cross-functionality graphic screens S, said screens forming part of the network 2 as presentation clients PC, PC1 to PC4 and displaying data D which is stemming from the production components 12 to 24 and which is manipulated from the business logic BL by the production modeler PM, where it is required, i.e. when the data stemming from one of the production components 12 to 24 has to further processed or averaged with data stemming from other production components.

According to the present invention, this system 2 further comprises within the MES software, preferably within the production scheduler PS, a routine for checking the consistency of the production schedule S within the manufacturing execution system. The production scheduler PS herein is a tool for scheduling a number of production activities in order to generate this production schedule PS. The production schedule PS can be designed graphically by means of the touch-screen and drag&drop techniques to place production activities within a desired workflow. The production scheduler PS typically also comprises a catalogue of constraints against which the scheduled production activities have to be checked. These constraints can be defined in advance according to the known dependencies and necessities in order to guarantee the proper execution of a scheduled activity. The number of production activities are continuously (or discontinuously) checked against the catalogue of contraints by a consistency checking routinge (preferably comprised in the production scheduler PS) in order to identify whether one or more of the defined constraints are violated by the current structure of activities scheduled. Typically, the scheduled activities are displayed a Gantt-chart indicating at least the timely dependencies in the production schedule S. In case a violated constraint has been identified by the consistency checking routine, the production activity itself (meaning its current position in the production schedule S causing the actual violation of the constraint is marked in the Gantt-chart in way that a programmer will identify this violation immediately and easily. Beside that, as illustrated in Figure 2, to the marked production activity a graphical attribute is added wherein this attribute is representative for the violated constraint itself and/or for the type of the violated constraint. Possible restraints are:
a) incompatible resource;
b) dependencies between production activities;
c) production order release date; and
d) production order due date.

For the production activities shown in the Gantt chart in Figure 2, the box border is GREEN for activities that do not violate any constraint. A box border is RED for activities that violate one or more constraints. The graphical attributes are existing in this example for all number of constraints. This graphical attribute is displayed on the box in case of a violated constraint. An "X"-symbol on the right edge has the meaning of a violated due date. An "X"-symbol on the left edge is representing a violated release date. A question mark "?" means an "incompatible machine" violation.

As shown in Figure 2 for an activity A the box border is illustrated in red colour being added by an "X"-symbol on the right edge meaning a violated due date. Below the Gantt chart, the operator finds a constraint report C which lists all the associated constraints. In other words, the Gantt chart including the production activity A currently violating a constraint and the violated constraint report C are displayed simultaneously.

These features therefore enable the production scheduler to receive a weighted information on the contraints currently violated including a direct linkage to the acitivity or the activities in the Gantt chart which has caused the respective violation. The production scheduler does not need to scroll between different screens one displaying the Gantt chart and another one displaying the list of violated constraints. Therefore, violated constraints can be more efficient resolved by changing the activities or changing just only the series of scheduled activities.

## Claims

1. A method for checking the consistency of a production schedule (S) within a manufacturing execution system (MES); comprising the steps of:
a) scheduling a number of production activities (A) in order to generate the production schedule (S);
b) defining a catalogue of constraints against which the scheduled production activities have to be checked;
c) checking the number of production activities (A) against the catalogue of contraints in order to identify a violated constraint;
d) displaying a Gantt-chart of the production schedule (S);
e) marking in the Gantt-chart the production activities (A), for which a violated constraint has been identified;
f) adding to the marked production activity a graphical attribute; said attribute being representative for the violated constraint itself and/or for the type of the violated constraint.

2. The method according to claim 1, wherein the catalogue comprises at least one of the following constraints:
a) incompatible resource;
b) dependencies between production activities;
c) production order release date; and
d) production order due date.

3. The method according to claim 1 or 2, wherein
said graphical attribute comprises a symbol and/or a position of a symbol relative to the production activity.

4. The method according to any of the preceding claims, wherein the Gantt chart including the production activity currently violating a constraint and a list of the violated constraints are displayed simultaneously.

5. A system for checking the consistency of a production schedule within a manufacturing execution system; comprising the steps of:
a) means for scheduling a number of production activities in order to generate the production schedule;
b) means for defining a catalogue of constraints against which the scheduled production activities have to be checked;
c) means for checking the number of production activities against the catalogue of contraints in order to identify a violated constraint;
d) means for displaying a Gantt-chart of the production schedule;
e) means for marking in the Gantt-chart the production activities, for which a violated constraint has been identified; and
f) means for adding to the marked production activity a graphical attribute; said attribute being representative for the violated constraint itself and/or for the type of the violated constraint.

6. The system according to claim 5, wherein the catalogue comprises at least one of the following constraints:
a) incompatible resource;
b) dependencies between production activities;
c) production order release date; and
d) production order due date.

7. The system according to claim 5 or 6, wherein said graphical attribute comprises a symbol and/or a position of a symbol relative to the production activity.

8. The method according to any of the preceding claims 5 to 7, wherein the Gantt chart including the production activity currently violating a constraint and a list of the violated constraints are displayed simultaneously.
